(19) Europäisches Patentamt
European Patent Office
Office européen des brevets

(11) **EP 4 711 720 A1**

(12) **EUROPEAN PATENT APPLICATION**
published in accordance with Art. 153(4) EPC

(43) Date of publication:
**18.03.2026 Bulletin 2026/12**

(21) Application number: **24829890.3**

(22) Date of filing: **28.02.2024**

(51) International Patent Classification (IPC):
**G01C 21/36** (2006.01)   **G01P 3/36** (2006.01)

(52) Cooperative Patent Classification (CPC):
**G01C 21/365; G01C 21/36; G01C 21/3655;
G01P 3/36**

(86) International application number:
**PCT/CN2024/079065**

(87) International publication number:
**WO 2025/001234 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310802547**

(71) Applicant: **Huawei Technologies Co., Ltd.
Shenzhen, Guangdong 518129 (CN)**

(72) Inventor: **SONG, Lang
Shenzhen, Guangdong 518129 (CN)**

(74) Representative: **Körber, Martin Hans
Mitscherlich PartmbB
Karlstraße 7
80333 München (DE)**

(54) **NAVIGATION METHOD, DEVICE, STORAGE MEDIUM, PROGRAM PRODUCT, AND VEHICLE**

(57) This application provides a navigation method and device, a storage medium, a program product, and a vehicle, and relates to the field of navigation technologies. The navigation method includes: in a process in which a target device travels toward a first location point, obtaining a first speed at which the target device currently travels; determining a playing parameter of a navigation animation based on the first speed, where the navigation animation indicates a traveling path for the target device to reach the first location point, and the playing parameter indicates at least a playing speed of the navigation animation; and outputting the navigation animation in a visualized manner based on the playing parameter. In this application, the playing speed of the navigation animation may be adaptively adjusted based on the current traveling speed of the target device, so that the navigation animation can be completely played before the target device reaches the first location point, to avoid deviation of the target device from a correct navigation route caused by no correct response made, due to failure in viewing complete prompt information, by a user when a vehicle reaches a first location.

In a process in which a target device travels toward a first location point, obtain a first speed at which the target device currently travels and an expected speed of the target device at the first location point — S210

Determine a first distance based on the first speed, the expected speed, and a user driving reaction time, where the first distance is greater than or equal to a product of the user driving reaction time and an average value of the first speed and the expected speed — S220

Output a navigation animation when the target device travels to a location that is at the first distance from the first location point — S230

FIG. 5

## Description

This application claims priority to Chinese Patent Application No. 202310802547.2, filed with the China National Intellectual Property Administration on June 30, 2023 and entitled "NAVIGATION METHOD AND DEVICE, STORAGE MEDIUM, PROGRAM PRODUCT, AND VEHICLE", which is incorporated herein by reference in its entirety.

## TECHNICAL FIELD

This application relates to the field of navigation technologies, and in particular, to a navigation method and device, a storage medium, a program product, and a vehicle.

## BACKGROUND

To improve navigation experience, some navigation devices may provide a navigation animation for a user, to achieve better prompt effect in an animation manner. For example, before a vehicle reaches a front location, namely, a crossroad, an augmented reality head-up display (Augmented Reality Head-Up Display, AR HUD) device on the vehicle may project, onto a front windshield of the vehicle, a navigation animation prompting the user to turn right ahead.

However, in a conventional technology, a playing speed of the navigation animation is fixed. In this case, when a speed of the vehicle is high, the navigation animation cannot be completely played before the vehicle reaches the front crossroad. Consequently, when the vehicle reaches the crossroad, it is too late for the user to control the vehicle to turn right, causing deviation of the vehicle from a correct navigation traveling path.

## SUMMARY

Some implementations of this application provide a navigation method and device, a storage medium, a program product, and a vehicle. The following describes this application from a plurality of aspects. Mutual reference may be made to implementations and beneficial effects of the following plurality of aspects.

According to a first aspect, this application provides a navigation method. The method includes: in a process in which a target device travels toward a first location point, obtaining a first speed at which the target device currently travels; determining a playing parameter of a navigation animation based on the first speed, where the navigation animation indicates a traveling path for the target device to reach the first location point, and the playing parameter indicates at least a playing speed of the navigation animation; and outputting the navigation animation in a visualized manner based on the playing parameter.

According to this implementation of this application, the playing speed of the navigation animation is determined based on a current traveling speed of a vehicle, so that the navigation animation is completely played before the vehicle reaches the first location point, to avoid deviation of the target device from a correct navigation route caused by insufficient time for a user to make, when the vehicle reaches the first location point, a correct response due to failure in viewing complete navigation prompt information.

In some implementations, determining the playing parameter of the navigation animation based on the first speed includes: determining a road type of a current traveling road of the target device; determining, based on the road type, a first average vehicle speed corresponding to the current traveling road; determining an adjustment coefficient of an initial playing parameter of the navigation animation based on the first speed and the first average vehicle speed; and adjusting the initial playing parameter based on the adjustment coefficient to obtain the playing parameter.

In some implementations, the playing parameter is playing duration of the navigation animation, the adjustment coefficient is an $M^{th}$ power of a ratio of the first average vehicle speed to the first speed, and M is greater than 0 and less than 1.

In some implementations, M is determined based on the road type of the current traveling road.

In some implementations, outputting the navigation animation includes: outputting the navigation animation when the target device travels to a location that is at a first distance from the first location point, where the first distance is determined based on the first speed, an expected speed of the target device at the first location point, and a user driving reaction time.

In some implementations, the first distance is greater than or equal to a product of the user driving reaction time and an average value of the first speed and the expected speed.

In some implementations, outputting the navigation animation in the visualized manner includes: displaying the navigation animation by using an augmented reality head-up display technology.

In some implementations, the navigation animation includes a path indication icon, and a virtual image of the path indication icon is superimposed at the first location point; and displaying the navigation animation includes: adjusting visibility of the path indication icon based on a current distance between the target device and the first location point, to cause the visibility of the path indication icon to be positively correlated with the current distance.

In some implementations, the path indication icon includes a first icon and a second icon that are superimposed on each other, and in a case of same display transparency, visibility of the first icon is higher than visibility of the second icon; and adjusting the visibility of the path indication icon based on the current distance between the target device and the first location point includes: separately adjusting first transparency of the first icon and second transparency of the second icon based on the current distance, to adjust the visibility of the path indication icon, where the first transparency is negatively correlated with the current distance, and the second transparency is positively correlated with the current distance.

In some implementations, the first icon and the second icon have a same size.

According to a second aspect, an implementation of this application provides a navigation method. The method includes: displaying a navigation animation by using an augmented reality head-up display technology in a process in which a target device travels toward a first location point, where the navigation animation indicates a forward path for the target device to reach the first location point; and the navigation animation includes a path indication icon, a virtual image of the path indication icon is superimposed at the first location point, and displaying the navigation animation includes: adjusting visibility of the path indication icon based on a current distance between the target device and the first location point, to cause the visibility of the path indication icon to be positively correlated with the current distance.

According to the implementation of this application, because the visibility of the path indication icon is positively correlated with the current distance (between the target device and the first location point), a larger current distance indicates a smaller path indication icon, and a smaller current distance indicates a larger path indication icon. This can avoid a case in which a large current distance causes a long projection distance of the path indication icon, and consequently the path indication icon cannot be seen clearly due to an excessively small size. This can also avoid a case in which a small current distance causes a short projection distance of the path indication icon, and consequently a line of sight of a user is blocked due to an excessively large size of the path indication icon.

In some implementations, the path indication icon includes a first icon and a second icon that are superimposed on each other, and in a case of same display transparency, visibility of the first icon is higher than visibility of the second icon; and adjusting the visibility of the path indication icon based on the current distance between the target device and the first location point includes: separately adjusting first transparency of the first icon and second transparency of the second icon based on the current distance, to adjust the visibility of the path indication icon, where the first transparency is negatively correlated with the current distance, and the second transparency is positively correlated with the current distance.

In some implementations, the first icon and the second icon have a same size.

According to a third aspect, an implementation of this application provides a navigation device, including: a memory, configured to store instructions executed by one or more processors of the navigation device; and a processor, where when the processor executes the instructions in the memory, the navigation device is enabled to perform the method provided in the implementations of the second aspect of this application. For beneficial effects that can be achieved in the third aspect, refer to beneficial effects of the method provided in the implementations of the first aspect or the second aspect. Details are not described herein again.

According to a fourth aspect, an implementation of this application provides a computer-readable storage medium. The computer-readable storage medium stores instructions. When the instructions are executed on a computer, the computer is enabled to perform the method provided in the implementations of the first aspect or the second aspect. For beneficial effects that can be achieved in the fourth aspect, refer to beneficial effects of the method provided in the implementations of the first aspect or the second aspect. Details are not described herein again.

According to a fifth aspect, an implementation of this application provides a computer program product. When program code included in the computer program product is executed by a computer or a processor, the computer or the processor performs the navigation method provided in the implementations of the first aspect or the second aspect. For beneficial effects that can be achieved in the fifth aspect, refer to beneficial effects of the method provided in the implementations of the first aspect or the second aspect. Details are not described herein again.

According to a sixth aspect, an implementation of this application provides a vehicle. The vehicle includes the navigation device provided in the third aspect. For beneficial effects that can be achieved in the sixth aspect, refer to beneficial effects of the navigation device provided in the implementations of the third aspect. Details are not described herein again.

**BRIEF DESCRIPTION OF DRAWINGS**

FIG. 1A to FIG. 1C are example application scenarios according to an embodiment of this application;
FIG. 2 is an example flowchart 1 of a navigation method according to an embodiment of this application;

FIG. 3 is an example diagram 1 of a navigation scenario according to an embodiment of this application;

FIG. 4 is an example diagram 1 of a vehicle traveling scenario according to an embodiment of this application;

FIG. 5 is an example flowchart 2 of a navigation method according to an embodiment of this application;

FIG. 6 is an example diagram 2 of a vehicle traveling scenario according to an embodiment of this application;

FIG. 7A and FIG. 7B are example diagrams of a right-turn arrow icon according to an embodiment of this application;

FIG. 8 is an example flowchart 3 of a navigation method according to an embodiment of this application;

FIG. 9A and FIG. 9B are example diagrams of a superposition principle of right-turn arrow icons according to an embodiment of this application;

FIG. 10A and FIG. 10B are example diagrams of a right-turn arrow icon according to an embodiment of this application;

FIG. 11 is a diagram of a structure of an electronic device according to an embodiment of this application;

FIG. 12 is a diagram of a software architecture of an electronic device according to an embodiment of this application;

FIG. 13 is a block diagram of an electronic device according to an embodiment of this application; and

FIG. 14 is a diagram of a structure of a system on chip (System on Chip, SoC) according to an embodiment of this application.

## DESCRIPTION OF EMBODIMENTS

Implementations of this application are used to provide a navigation method. According to the method provided in this application, a playing speed of a navigation animation may be adaptively adjusted based on a current traveling speed of a vehicle, so that the navigation animation can be completely played, to implement a navigation reminding function.

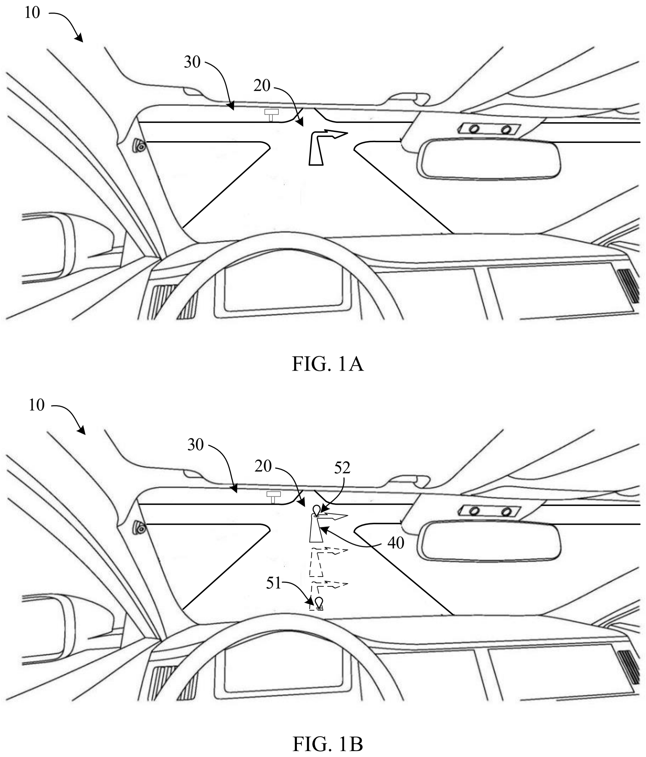

FIG. 1A shows an example application scenario of this application. Refer to FIG. 1A. Before a vehicle 10 reaches a front crossroad 20, an AR HUD device on the vehicle 10 may project a navigation animation onto a front windshield 30 of the vehicle 10, to prompt a user to turn right at the front crossroad 20.

For example, refer to FIG. 1B. When the navigation animation starts to be played, a right-turn arrow icon 40 that is for prompting to turn right and that is in the animation moves upward from a start projection location 51 below the crossroad 20 to a location 52 in the middle of the crossroad 20 for 2 seconds, and then performs periodic light sweep at the location 52 for 2 seconds at a period of 0.2 second; after that, the playing ends. Playing duration (or referred to as "a consumed time") of the animation is 4 seconds. It may be understood that content and the playing duration of the navigation animation shown in FIG. 1B are merely examples for description. In another embodiment, the navigation animation may be other content, and the playing duration of the navigation animation may alternatively be other duration, for example, 3s or 6s. This is not limited in this application.

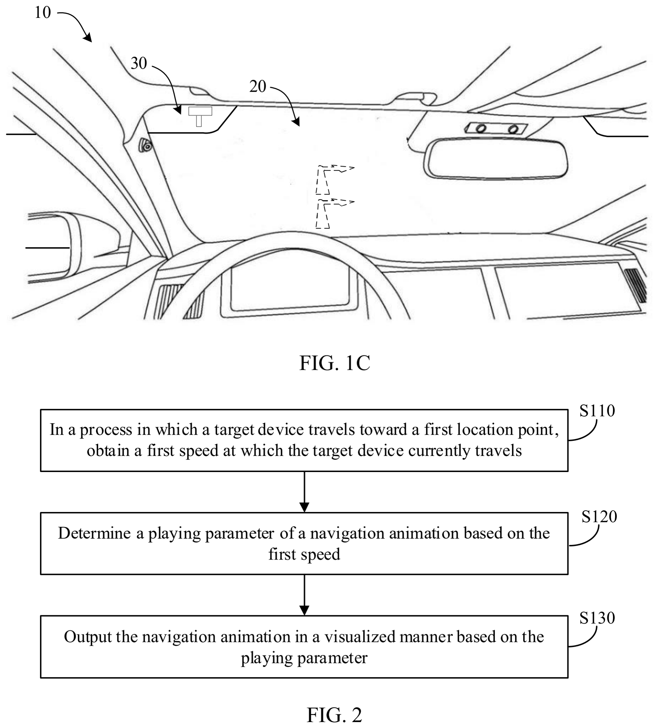

Because the playing duration of the navigation animation is fixed, with reference to FIG. 1C, when a speed of the vehicle 10 is high, a case in which the vehicle 10 has reached the crossroad 20 but the navigation animation is not completely played occurs. In other words, before the vehicle 10 reaches the crossroad 20, not all segments of the navigation animation are played, but only a part of the segments are played. Consequently, the user cannot see complete navigation prompt information, and therefore, when the vehicle 10 reaches the crossroad 20, it is too late for the user to make a correct response. As a result, the vehicle 10 misses the crossroad 20 and deviates from a correct navigation traveling route.

To resolve the foregoing technical problem, this embodiment provides a navigation method. In the method provided in this embodiment, in a process in which a vehicle 10 (used as an example of a target device) travels toward a front crossroad 20 (used as an example of a first location point), an AR HUD device (used as an example of a navigation device) may adaptively adjust a playing speed of a navigation animation based on a first speed at which the vehicle 10 currently travels. For example, if the current traveling speed of the vehicle 10 is increased, the navigation animation may be played at a high speed. In this way, before the vehicle 10 reaches the crossroad 20, the navigation animation can be completely played, and a user can see complete navigation prompt information before the vehicle 10 reaches the crossroad 20, and therefore can control, based on the complete navigation prompt information, the vehicle 10 to turn right at the front crossroad 20, to avoid deviation of the vehicle 10 from a correct navigation traveling route.

The following describes specific embodiments of the navigation method provided in this application.

FIG. 2 shows a navigation method according to an embodiment of this application. Refer to FIG. 2. The navigation method provided in this embodiment includes the following steps.

S110: In a process in which a target device travels toward a first location point, obtain a first speed at which the target device currently travels.

For ease of understanding, in this embodiment, a vehicle 10 is used as an example of the target device, a crossroad 20 is used as an example of the first location point, and an AR HUD device is used as an example of a navigation device. However, it may be understood that, in another embodiment, the target device may alternatively be a traffic device, for example, a train, an airplane, or a non-motor vehicle; the first location point may alternatively be a location to which the navigation device needs to prompt a traveling path, for example, a turning intersection (for example, a right-turn intersection or a left-turn intersection), a lane change intersection (for example, a ramp intersection), a highway exit, a toll station, a gas station, a charging station, or a specified destination; and the navigation device may alternatively be an electronic device that can provide a navigation animation, for example, a mobile phone, a tablet, or a vehicle-mounted screen. The navigation device may be disposed on the target device. For example, the navigation device is installed inside the target device.

In this embodiment, the AR HUD device with a navigation function is disposed on the vehicle 10. The AR HUD device may obtain information such as traveling information (for example, information such as a location and a speed), road information, and road condition information of the vehicle 10 in real time, generate a corresponding navigation animation based on the information, and then project the navigation animation onto a front windshield 30 of the vehicle 10.

The AR HUD device is a navigation device that can implement an AR HUD technology. The AR HUD technology combines an AR augmented reality technology and a HUD head-up display function. In this technology, virtual information (for example, an arrow icon) in a navigation animation may be superimposed in a three-dimensional road environment, so that visual special effect matches an element of a real road, navigation information is displayed more abundantly and intuitively, and a larger angle of view and a longer imaging distance are provided.

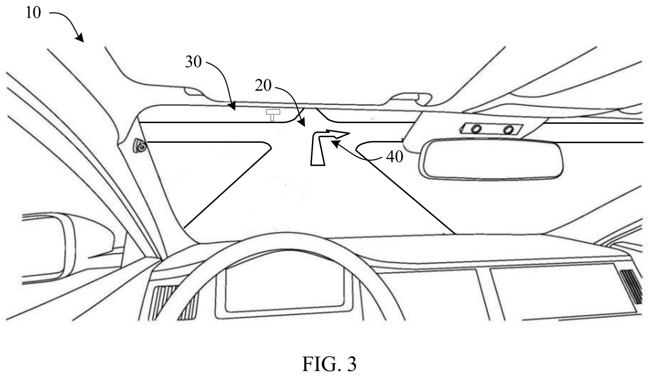

Refer to FIG. 3. In a process in which the vehicle 10 travels toward the front crossroad 20, the AR HUD device may obtain a first speed at which the vehicle 10 currently travels.

S120: Determine a playing parameter of a navigation animation based on the first speed.

The navigation animation indicates a traveling path for the vehicle 10 to reach the first location point. For example, the navigation animation may be the animation shown in FIG. 1B. The playing parameter indicates at least playing duration of the navigation animation. For example, the playing parameter includes a playing speed and/or playing duration of the navigation animation. It may be understood that the playing speed is inversely proportional to the playing duration, and a higher playing speed of the navigation animation indicates shorter playing duration of the navigation animation. On the contrary, a lower playing speed of the navigation animation indicates longer playing duration. Therefore, the playing duration of the navigation animation may reflect the playing speed of the navigation animation. The following uses the playing duration as an example of the playing parameter.

Road types include a highway, an urban road, a rural road, and the like. Different types of roads correspond to different average vehicle speeds. For example, an average vehicle speed corresponding to the highway may be 90 kilometers/hour, an average vehicle speed corresponding to the urban road may be 45 kilometers/hour, and an average vehicle speed corresponding to the rural road may be 35 kilometers/hour.

In some embodiments, the playing duration of the navigation animation may be determined by using an average vehicle speed corresponding to a current traveling road of the vehicle 10 as a reference and based on the current traveling speed of the vehicle 10.

Specifically, after obtaining the first speed at which the vehicle 10 currently travels, the AR HUD device may determine a road type of the current traveling road of the vehicle 10, determine, based on the road type, a first average vehicle speed corresponding to the current traveling road, determine an adjustment coefficient of initial playing duration (used as an initial playing parameter) of the navigation animation based on the first speed and the first average vehicle speed, and adjust the initial playing duration of the navigation animation based on the adjustment coefficient, to obtain adjusted playing duration (used as the playing parameter).

For example, the playing duration of the navigation animation may be calculated by using Formula (1):

$$D = D_0 * \frac{1}{\sqrt[W]{V_{RT}/V_A}} \qquad (1)$$

Herein, D is the adjusted playing duration of the navigation animation, $D_0$ is the initial playing duration of the navigation animation, $V_A$ is the first average vehicle speed corresponding to the current traveling road of the vehicle 10, and $V_{RT}$ is the first speed at which the vehicle 10 currently travels. W is a weight coefficient, and a value of W is greater than 1. For example, W is between 3 and 5. It may be understood that $\frac{1}{\sqrt[W]{V_{RT}/V_A}}$ in Formula (1) is the adjustment coefficient of the initial playing duration $D_0$ of the navigation animation.

In some embodiments, Formula (1) may be deformed to obtain Formula (2):

$$D = D_0 * \left(\frac{V_A}{V_{RT}}\right)^M \qquad (2)$$

Herein, M = 1/W, a value of M = 1/W is greater than 0 and less than 1. $\left(\frac{V_A}{V_{RT}}\right)^M$ in Formula (2) is the adjustment coefficient of the initial playing duration of the navigation animation.

It may be understood that the weight coefficient W or M indicates an impact amplitude of a traveling speed of the vehicle 10 on a playing speed of the navigation animation.

In some embodiments, the weight coefficient W or M is fixed after being predetermined. However, when the vehicle 10 travels on different types of roads, change ranges of traveling speeds of the vehicle 10 are different. If the impact amplitude of the traveling speed of the vehicle 10 on the playing speed of the navigation animation is fixed, when the vehicle 10 travels on the highway (a vehicle speed range of the highway is 60 kilometers/hour to 120 kilometers/hour), because a change range of the traveling speed of the vehicle 10 is excessively large, a phenomenon that the playing speed of the navigation animation is excessively high or excessively low occurs, affecting prompt effect of the navigation animation; or when the vehicle 10 travels on the rural road (a vehicle speed range of the rural road is 30 kilometers/hour to 40 kilometers/hour), because a change range of the traveling speed of the vehicle 10 is excessively small, an adjustment range of the playing speed of the navigation animation is excessively small, and adjustment of the playing speed of the navigation animation is not obvious, resulting in poor adjustment effect.

To make adjustment of the playing speed of the navigation animation be applicable to different types of road scenarios, in this embodiment, a value of the weight coefficient W or M may be determined based on the type of the current traveling road of the vehicle 10.

For example, when the vehicle 10 travels on the highway, it may be determined that W is a relatively large parameter (for example, a value 5). In other words, it is determined that M is a relatively small parameter. In this way, an initial playing speed (namely, the initial playing duration) of the navigation animation may be adjusted by using a relatively small adjustment coefficient, to avoid a case in which the playing speed of the navigation animation is excessively high or excessively low.

For another example, when the vehicle 10 travels on the rural road, it may be determined that W is a relatively small parameter (for example, a value 3). In other words, it is determined that M is a relatively small parameter. In this way, an initial playing speed of the navigation animation may be adjusted by using a relatively large adjustment coefficient, so that adjustment of the playing speed of the navigation animation is more obvious.

S130: Output the navigation animation in a visualized manner based on the playing parameter.

After determining the playing duration of the navigation animation, the AR HUD device may project, based on the playing duration, the navigation animation onto the front windshield 30 of the vehicle 10 before the vehicle 10 reaches the crossroad 20, so that when the vehicle 10 reaches the crossroad 20, all segments of the navigation animation are played.

In another example, the navigation device may alternatively perform outputting in another visualized manner. For example, if the navigation device is a vehicle-mounted screen, the navigation animation may be displayed on the vehicle-mounted screen based on the determined playing duration.

In conclusion, in this embodiment, the AR HUD device may adaptively adjust the playing speed of the navigation animation based on the current traveling speed of the vehicle 10, so that a higher current speed of the vehicle 10 indicates a higher playing speed of the navigation animation. In this way, it can be ensured that all the segments of the navigation animation are played before the vehicle 10 reaches the crossroad 20, so that a user can see the complete navigation animation before the vehicle 10 reaches the crossroad 20, and therefore can control, based on navigation indication information in the navigation animation, the vehicle 10 to turn right at the front crossroad 20, to avoid deviation of the vehicle 10 from a correct navigation route.

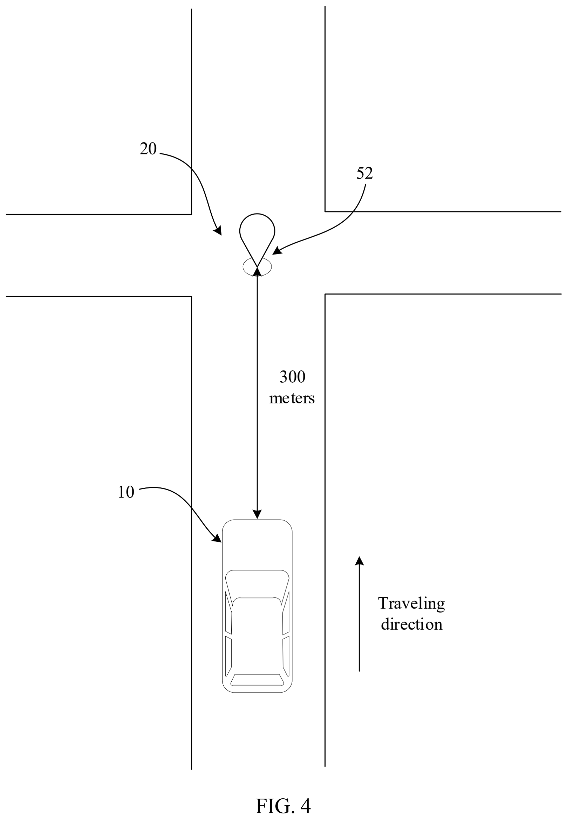

In some embodiments, with reference to FIG. 4, in a process in which the vehicle 10 travels toward the crossroad 20, when a distance between the vehicle 10 and a location 52 in the middle of the crossroad 20 is a specified distance (for example, 300 meters), the AR HUD device projects the navigation animation, to remind the user to turn right at the front crossroad 20. It may be understood that the specified distance is a preset fixed distance. In some cases, when the speed of the vehicle 10 is excessively high, even if all the segments of the navigation animation can be played before the vehicle 10 reaches the crossroad 20, because an occasion for playing the navigation animation is not early enough, a reaction time left for the user is excessively short, and consequently when the vehicle 10 reaches the crossroad 20, it is too late for the user to respond. As a result, the vehicle 10 misses the crossroad 20 and deviates from a correct navigation route.

To reserve a sufficient reaction time for the user and prevent the vehicle 10 from missing the crossroad 20, the occasion for playing the navigation animation may be flexibly adjusted based on the current traveling speed of the vehicle 10. For example, a higher current traveling speed of the vehicle 10 indicates that the AR HUD device projects the navigation animation earlier. The following describes a process of adjusting the occasion for playing the navigation animation.

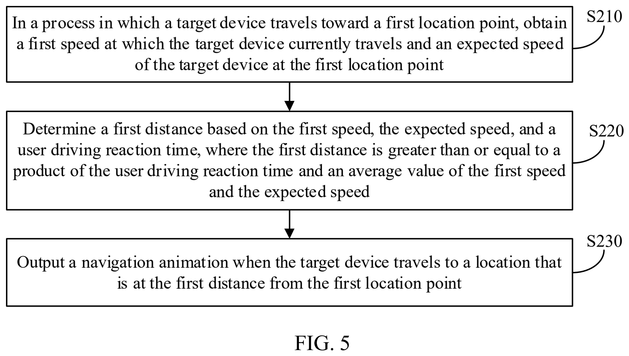

FIG. 5 shows a navigation method according to an embodiment of this application. Refer to FIG. 5. The navigation method provided in this embodiment includes the following steps.

S210: In a process in which a target device travels toward a first location point, obtain a first speed at which the target device currently travels and an expected speed of the target device at the first location point.

In this embodiment, a vehicle 10 is still used as an example of the target device, a crossroad 20 is still used as an example of the first location point, and an AR HUD device is still used as an example of a navigation device.

In a process in which the vehicle 10 travels toward the front crossroad 20, the AR HUD device obtains a first speed at which the vehicle 10 currently travels and an expected speed at which the vehicle 10 reaches the crossroad 20.

In some embodiments, the expected speed may be determined based on a location type of the first location point. For example, when the first location point is a location at which turning needs to be performed, for example, a turning intersection or the crossroad 20, the expected speed at the first location point may be 20 kilometers/hour. For another example, when the first location point is a location at which parking needs to be performed, for example, a gas station, a toll station, or a destination, the expected speed at the first location point may be 0 kilometers/hour.

S220: Determine a first distance based on the first speed, the expected speed, and a user driving reaction time, where the first distance is greater than or equal to a product of the user driving reaction time and an average value of the first speed and the expected speed.

The first distance is a current distance between the vehicle 10 and the crossroad 20 when the AR HUD device projects a navigation animation.

In some embodiments, after obtaining the first speed at which the vehicle 10 currently travels and the expected speed at which the vehicle 10 reaches the crossroad 20, the AR HUD device may determine the first distance according to Formula (3):

$$L_1 \geq T_R * \frac{V_D + V_{RT}}{2} \qquad\qquad (3)$$

Herein, $L_1$ is the first distance, $T_R$ is the user driving reaction time (usually between 0.4 second and 1 second), $V_D$ is the expected speed at which the vehicle 10 reaches the crossroad 20, and $V_{RT}$ is the first speed at which the vehicle 10 currently travels.

In some embodiments, $L_1 = (T_R + D) * \frac{V_D + V_{RT}}{2}$. D is playing duration of the navigation animation, and D may be determined according to the method described in steps S110 to S130.

In some embodiments, to make the user have more sufficient operation time, $L_1 = K * (T_R + D) * \frac{V_D + V_{RT}}{2}$. K is a constant greater than 1, for example, K=1.05-1.3.

S230: Output the navigation animation when the target device travels to a location that is at the first distance from the first location point.

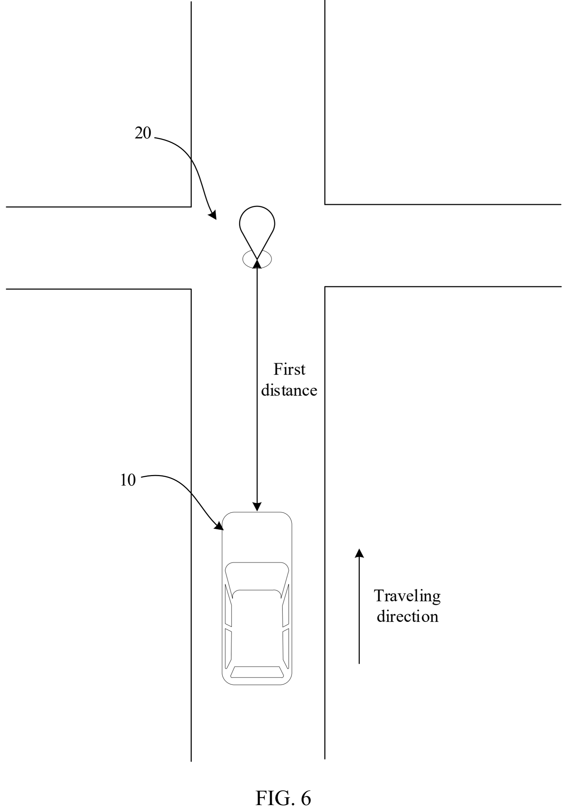

Refer to FIG. 6. In a process in which the vehicle 10 travels toward the crossroad 20, the AR HUD device obtains a real-time distance between the vehicle 10 and the crossroad 20, and determines, based on the real-time distance, whether the vehicle 10 currently travels to a location that is at the first distance from the crossroad 20. If the vehicle 10 travels to the location that is at the first distance from the crossroad 20, the AR HUD device projects the navigation animation. If the vehicle 10 does not travel to the location that is at the first distance from the crossroad 20, the AR HUD device temporarily does not project the navigation animation.

In conclusion, in this embodiment, the AR HUD device may determine, based on the current traveling speed of the vehicle 10, a start projection distance of the navigation animation, namely, the first distance between the vehicle 10 and the crossroad 20 present when the AR HUD device projects the navigation animation. A higher current traveling speed of the vehicle 10 indicates a longer start projection distance. In this way, the AR HUD device can project the navigation animation earlier, and a longer reaction time is reserved for the user, to avoid a case in which the user misses the crossroad 20 because it is too late for the user to respond, and consequently the vehicle 10 deviates from a correct navigation route.

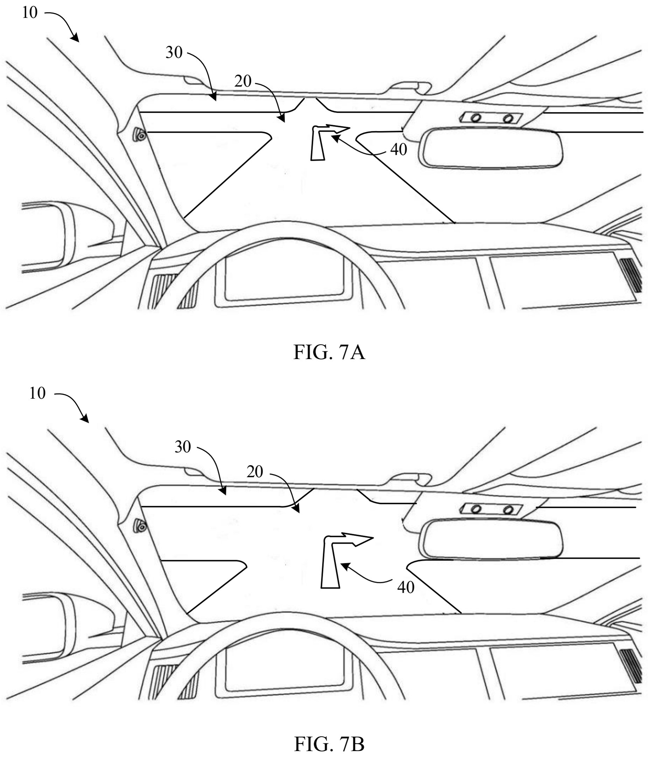

When the AR HUD device projects the navigation animation, three-dimensional software may be first used to establish three-dimensional space, and then the navigation animation projected onto a front windshield 30 and a current actual scene are integrated into same coordinate space through adjustment of a location and a focal length of a three-dimensional camera and a three-dimensional space scale. That is, a virtual image of a path indication icon in the navigation animation is superimposed to an actual environment. Refer to FIG. 7A. When the AR HUD device projects the navigation animation, a virtual image of a right-turn arrow icon 40 (used as an example of the path indication icon) in the navigation animation is superimposed at a middle location of the crossroad 20. It may be understood that the virtual image of the right-turn arrow icon 40 adapts to the actual environment, and visual effect of perspective scaling is formed in a field of view. In other words, a longer distance between the vehicle 10 and the crossroad 20 indicates a smaller size of the right-turn arrow icon 40. On the contrary, a shorter distance between the vehicle 10 and the crossroad 20 indicates a larger size of the right-turn arrow icon 40.

As shown in FIG. 7A, when the vehicle 10 is far away from the crossroad 20 (for example, 300 meters), a size of the right-turn arrow icon 40 is small. When the vehicle 10 is close to the crossroad 20 (for example, 200 meters) after traveling for a distance toward the crossroad 20, as shown in FIG. 7B, a size of the right-turn arrow icon 40 becomes larger.

It may be understood that, when a long distance between the vehicle 10 and the crossroad 20 causes an excessively small size of the right-turn arrow icon 40, after the virtual image of the right-turn arrow icon 40 is superimposed on an actual scene, the virtual image may become unobvious, and consequently a problem that the right-turn arrow icon 40 is unclear or cannot be found occurs. However, when a short distance between the vehicle 10 and the crossroad 20 causes an excessively large size of the right-turn arrow icon 40, a line of sight of the user is blocked, affecting driving safety.

To avoid the foregoing problem, visibility of the right-turn arrow icon 40 may be adaptively adjusted based on a current distance between the vehicle 10 and the crossroad 20. For example, when the vehicle 10 is far away from the crossroad 20, the visibility of the right-turn arrow icon 40 is high. On the contrary, when the vehicle 10 is close to the crossroad 20, the visibility of the right-turn arrow icon 40 is low. In this way, a problem that the right-turn arrow icon 40 cannot be seen clearly due to being excessively small and the line of sight is blocked due to an excessively large right-turn arrow icon 40 can be avoided. The following describes a process of determining the visibility of the right-turn arrow icon 40.

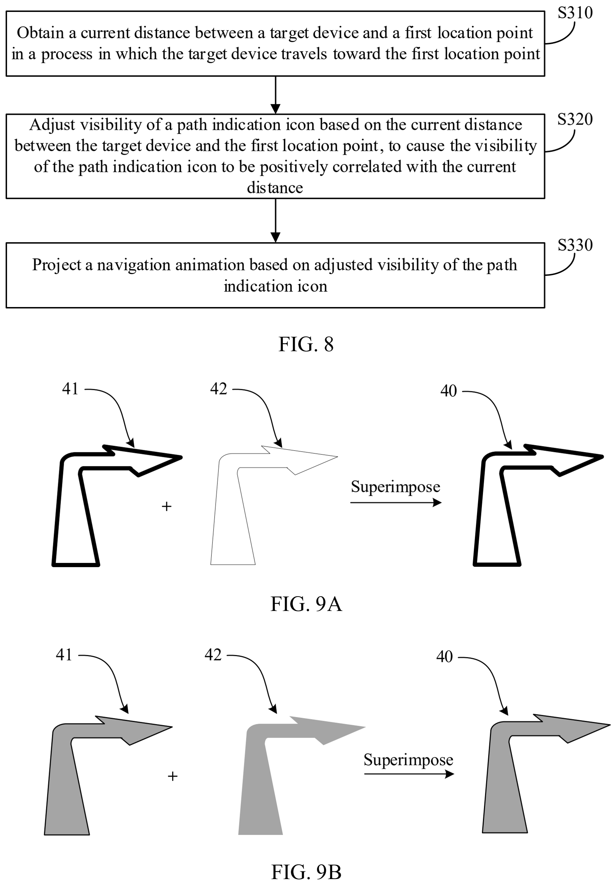

FIG. 8 shows a method according to an embodiment of this application. Refer to FIG. 8. A navigation method provided in this embodiment includes the following steps.

S310: Obtain a current distance between a target device and a first location point in a process in which the target device travels toward the first location point.

In this embodiment, a vehicle 10 is still used as an example of the target device, a crossroad 20 is still used as an example of the first location point, and an AR HUD device is still used as an example of a navigation device.

In a process in which the vehicle 10 travels toward the front crossroad 20, the AR HUD device obtains a current distance between the vehicle 10 and the crossroad 20.

S320: Adjust visibility of a path indication icon based on the current distance between the target device and the first location point, to cause the visibility of the path indication icon to be positively correlated with the current distance.

In this application, a right-turn arrow icon 40 is used as an example of the path indication icon. However, it may be understood that, in another embodiment, the path indication icon may alternatively be another type of icon, for example, a left-turn arrow icon, a surrounding arrow icon, a stop indication icon, or a lane change indication icon.

In some embodiments, with reference to FIG. 9A, the right-turn arrow icon 40 may be formed by superimposing a right-turn arrow icon 41 (used as an example of a first icon) and a right-turn arrow icon 42 (used as an example of a second icon) that are of a same size. In addition, in a case in which display transparency of the right-turn arrow icon 41 is the same as display transparency of the right-turn icon B, visibility of the right-turn arrow icon 41 is higher than visibility of the right-turn arrow icon 42.

For example, as shown in FIG. 9A, a contour line of the right-turn arrow icon 41 is thicker than a contour line of the right-turn arrow icon 42.

For another example, as shown in FIG. 9B, the right-turn arrow icon 41 has a contour line, and the right-turn arrow icon 42 has no contour line.

For another example, the right-turn arrow icon 41 is filled with a darker color (for example, dark blue), and the right-turn arrow icon is filled with a lighter color (for example, light yellow).

For another example, the right-turn arrow icon 41 and the right-turn arrow icon 42 may be icons of different map (or model) materials. For example, the right-turn arrow icon 41 is an icon of a wood texture material type, and the right-turn arrow icon 42 is an icon of a glass material type.

In some other embodiments, the right-turn arrow icon 41 and the right-turn arrow icon 42 may alternatively be icons of different sizes.

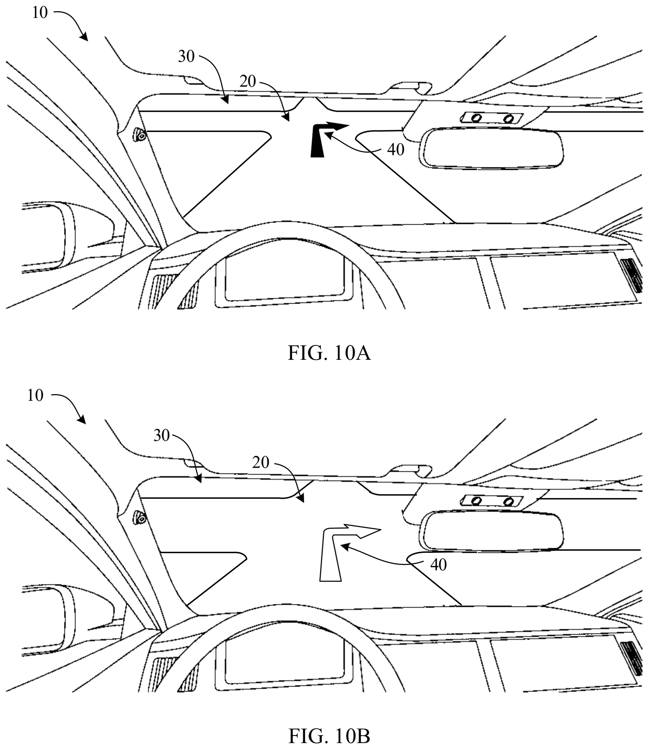

In a process in which the vehicle 10 travels toward the crossroad 20, the visibility of the right-turn arrow icon 41 and the visibility of the right-turn arrow icon 42 may be separately adjusted based on the current distance between the vehicle 10 and the crossroad 20, so that first transparency of the right-turn arrow icon 41 is negatively correlated with the current distance, and second transparency of the right-turn arrow icon 42 is positively correlated with the current distance. In this way, visibility of the right-turn arrow icon 40 is positively correlated with the current distance. As shown in FIG. 10A and FIG. 10B, a longer current distance between the vehicle 10 and the crossroad 20 indicates higher visibility of the right-turn arrow icon 40. On the contrary, a shorter current distance between the vehicle 10 and the crossroad 20 indicates lower visibility of the right-turn arrow icon 40.

For example, the first transparency of the right-turn arrow icon 41 may be calculated by using Formula (4):

$$Q_1 = 1 - \frac{D_{RT} - D_{min}}{D_{max} - D_{min}} \qquad (4)$$

Herein, $Q_1$ is the first transparency of the right-turn arrow icon 41, $D_{RT}$ is the current distance between the vehicle 10 and the crossroad 20, $D_{min}$ is a preset minimum distance, and $D_{max}$ is a preset maximum distance.

The second transparency of the right-turn arrow icon 42 may be calculated by using Formula (5):

$$Q_2 = \frac{D_{RT} - D_{min}}{D_{max} - D_{min}} \qquad (5)$$

Herein, $Q_2$ is the second transparency of the right-turn arrow icon 42.

In some embodiments, $D_{max}$ may be a maximum projection distance of a virtual image of the right-turn arrow icon 40, namely, a distance between the vehicle 10 and the crossroad 20 present when the virtual image of the right-turn arrow icon 40 is projected for a first time (namely, a first distance), for example, 400 meters. $D_{min}$ may be a minimum projection distance of the virtual image of the right-turn arrow icon 40, namely, a distance between the vehicle 10 and the crossroad 20 present when the projection of the virtual image of the right-turn arrow icon 40 ends, for example, 2 meters.

It can be learned from Formula (4) and Formula (5) that when the current distance $D_{RT}$ between the vehicle 10 and the crossroad 20 is the maximum projection distance $D_{max}$, the first transparency $Q_1$ of the right-turn arrow icon 41 is 0, indicating that the right-turn arrow icon 41 is completely opaque; and the second transparency of the right-turn arrow icon 42 is 1, indicating that the right-turn arrow icon 42 is completely transparent. In this way, the right-turn arrow icon 41 and the right-turn arrow icon 42 may be superimposed to obtain a right-turn arrow icon 40 with high visibility. This avoids a case in which the right-turn arrow icon 40 cannot be seen clearly due to being excessively small.

On the contrary, when the current distance $D_{RT}$ between the vehicle 10 and the crossroad 20 is the minimum projection distance $D_{min}$, the first transparency $Q_1$ of the right-turn arrow icon 41 is 1, indicating that the right-turn arrow icon 41 is completely transparent; and the second transparency of the right-turn arrow icon 42 is 0, indicating that the right-turn arrow icon 42 is completely opaque. In this way, the right-turn arrow icon 41 and the right-turn arrow icon 42 may be superimposed to obtain a right-turn arrow icon 40 with low visibility. This avoids a case in which a line of sight of a user is blocked due to an excessively large right-turn arrow icon 40.

It may be understood that, in a process in which the current distance between the vehicle 10 and the crossroad 20 decreases, because the transparency of the right-turn arrow icon 41 and the transparency of the right-turn arrow icon 42 change inversely, transition of the visibility of the right-turn arrow icon 40 is smooth and natural, to avoid a sudden visibility change that affects user attention and consequently affects driving safety.

S330: Project a navigation animation based on adjusted visibility of the path indication icon.

After adjusting the visibility of the right-turn arrow icon 41, the AR HUD device projects a right-turn arrow icon 41 with adjusted visibility onto a front windshield 30 of the vehicle 10.

In conclusion, in this embodiment, the visibility of the right-turn arrow icon may be adjusted based on the current distance between the vehicle 10 and the crossroad 20. For example, when the current distance between the vehicle 10 and the crossroad 20 is long, the visibility of the right-turn arrow icon is high. In this way, even if the size of the right-turn arrow icon is small, the user can clearly see the right-turn arrow icon. When the current distance between the vehicle 10 and the crossroad 20 is short, the visibility of the right-turn arrow icon is low. Because the size of the right-turn arrow icon is large in this case, even if the visibility is low, the user can still clearly see the right-turn arrow icon. In addition, the visibility of the right-turn arrow icon is low, and the right-turn arrow icon does not interfere with the line of sight of the user due to the large size.

The foregoing describes the technical solutions of this application by using a plurality of embodiments as examples. It should be noted that the navigation device may perform steps in a single embodiment, or may perform steps in the plurality of embodiments. For example, the navigation device may perform the steps (for example, steps S110 to S130) in the embodiment shown in FIG. 2, and also perform the steps (for example, steps S210 to S230 and steps S310 to 330) in the embodiment shown in FIG. 5 and/or the embodiment shown in FIG. 8.

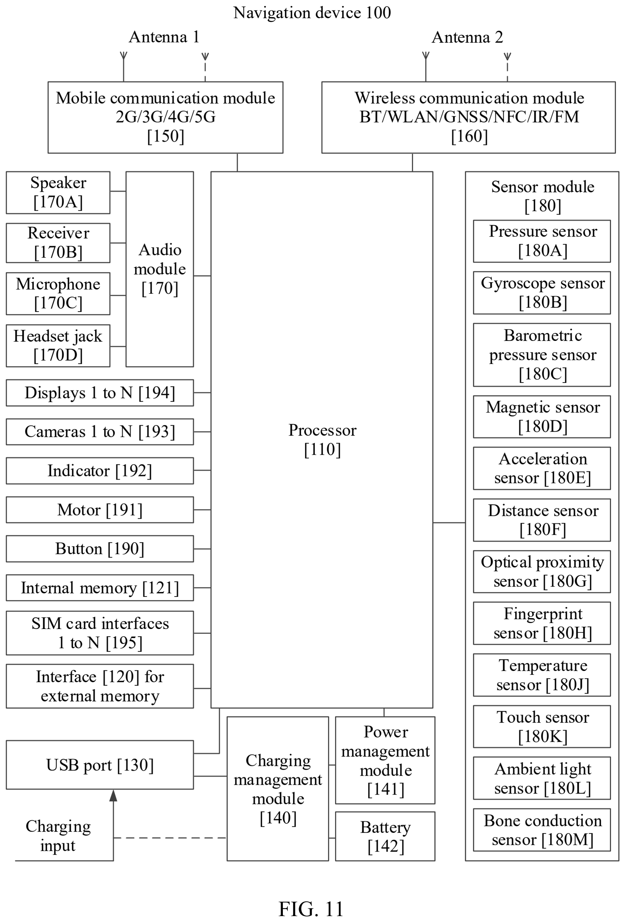

FIG. 11 is a diagram of a structure of a navigation device 100. The navigation device 100 may include a processor 110, an interface 120 for external memory, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the navigation device 100. In some other embodiments of this application, the navigation device 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, and a subscriber identity module (subscriber identity module, SIM) interface.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the navigation device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. The PCM interface may also be configured to perform audio communication, and sample, quantize, and code an analog signal. In some embodiments, the audio module 170 may be coupled to the wireless communication module 160 through a PCM bus interface. The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the navigation device 100. The processor 110 communicates with the display 194 through the DSI, to implement a display function of the navigation device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

It may be understood that an interface connection relationship between the modules that are shown in this embodiment of the present invention is merely an example for description, and does not constitute a limitation on the structure of the navigation device 100. In some other embodiments of this application, the navigation device 100 may alternatively use an interface connection manner different from that in the foregoing embodiment, or use a combination of a plurality of interface connection manners.

The USB connector 130 is a connector that complies with a USB standard specification, and may be configured to connect the navigation device 100 to a peripheral device. Specifically, the USB connector 130 may be a standard USB connector (for example, a Type-C connector), a mini USB connector, a micro USB connector, or the like.

The charging management module 140 is configured to receive charging input from a charger. The charger may be a wireless charger or a wired charger. In some embodiments of wired charging, the charging management module 140 may receive charging input from the wired charger through the USB connector 130. In some embodiments of wireless charging, the charging management module 140 may receive wireless charging input through a wireless charging coil of the navigation device 100. The charging management module 140 supplies power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electricity leakage or impedance). In some other embodiments, the power management module 141 may alternatively be disposed in the processor 110. In some other embodiments, the power management module 141 and the charging management module 140 may alternatively be disposed in a same component.

A wireless communication function of the navigation device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the navigation device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the navigation device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, and the like), or displays an image or a video by using the display 194. In some embodiments, the modem processor may be an independent component. In some other embodiments, the modem processor may be independent of the processor 110, and may be disposed in a same component as the mobile communication module 150 or another functional module.

The wireless communication module 160 may provide a wireless communication solution that is applied to the navigation device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the navigation device 100, the antenna 1 is coupled to the mobile communication module 150, and the antenna 2 is coupled to the wireless communication module 160, so that the navigation device 100 can communicate with a network and another device by using a wireless communication technology.

The navigation device 100 may implement a display function by using the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute instructions to generate or change display information.

The display 194 is configured to display an image, a video, and the like. The display 194 includes a display panel. In some embodiments, the navigation device 100 may include one or N displays 194. N is a positive integer greater than 1.

The navigation device 100 may implement an image shooting function by using the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scene. In some embodiments, the ISP may be disposed in the camera 193.

The camera 193 is configured to capture a static image or a video. An optical image of an object is generated through a lens, and is projected onto a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the navigation device 100 may include one or N cameras 193. N is a positive integer greater than 1.

The digital signal processor is configured to process a digital signal, and may process another digital signal in addition to the digital image signal. For example, when the navigation device 100 selects a frequency, the digital signal processor is configured to perform Fourier transform and the like on frequency energy.

The video codec is configured to compress or decompress a digital video. The navigation device 100 may support one or more video codecs. In this way, the navigation device 100 may play or record videos in a plurality of encoding formats.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the navigation device 100, for example, image recognition, facial recognition, voice recognition, and text understanding.

The interface 120 for external memory may be configured to connect to an external memory card, for example, a micro SD card, to extend a storage capability of the navigation device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, an image playing function), and the like. The data storage area may store data (for example, audio data or an address book) and the like created during use of the navigation device 100. In addition, the internal memory 121 may include a high-speed random access memory, or may include a non-volatile memory, for example, at least one magnetic disk storage component or a flash memory component. The processor 110 runs instructions stored in the internal memory 121 and/or instructions stored in the memory disposed in the processor, to perform various function applications and data processing of the navigation device 100.

The navigation device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The navigation device 100 may be used for listening to music or answering a hands-free call by using the speaker 170A. The receiver 170B, also referred to as an "earpiece", is configured to convert an audio electrical signal into a sound signal. When a call is answered or voice information is received by using the navigation device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by moving a human mouth close to the microphone 170C to input a sound signal to the microphone 170C. At least one microphone 170C may be disposed in the navigation device 100. In some other embodiments, two microphones 170C may be disposed in the navigation device 100, to collect a sound signal and further implement a noise reduction function. The headset jack 170D is configured to connect to a wired headset.

A software system of the navigation device 100 may use a layered architecture, an event-driven architecture, a microkernel architecture, a microservice architecture, or a cloud architecture. In this embodiment of the present invention, an Android™ system of a layered architecture is used as an example to illustrate a software structure of the navigation device 100.

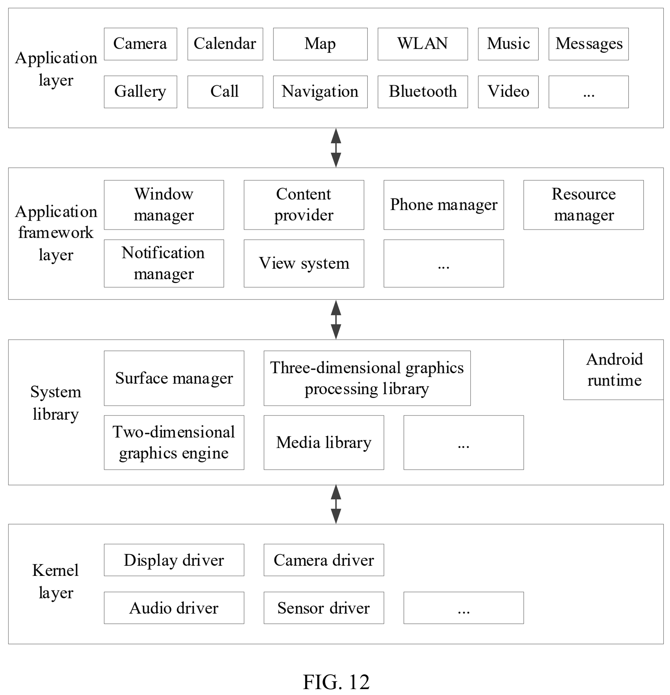

FIG. 12 is a block diagram of a software structure of a navigation device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 12, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 12, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function for the navigation device 100, for example, management of a call status (including answering, declining, or the like).

The resource manager provides various resources such as a localized character string, an icon, a picture, a layout file, and a video file for an application.

The notification manager enables an application to display, in the status bar, notification information, which may be used for conveying a notification-type message that may automatically disappear after a short stay without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a performance function that needs to be called in Java language and a core library of Android.

The application layer and the application framework layer run in the virtual machine. The virtual machine executes Java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (Media Library), a three-dimensional graphics processing library (for example, an OpenGL ES), and a 2D graphics engine (for example, an SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

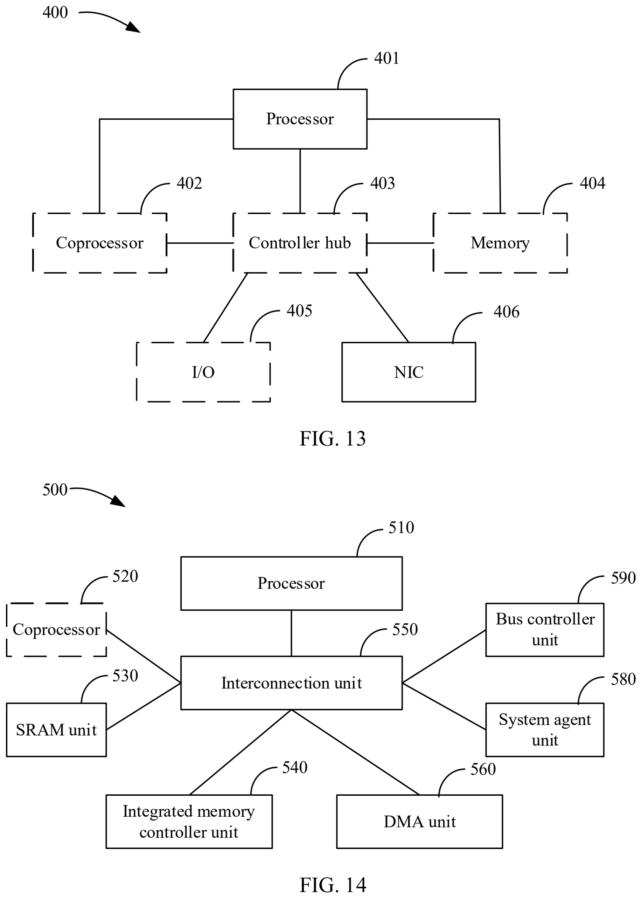

FIG. 13 is a block diagram of a navigation device 400 according to an embodiment of this application. The navigation device 400 may include one or more processors 401 coupled to a controller hub 403. For at least one embodiment, the controller hub 403 communicates with the processor 401 through a multi-branch bus such as a front-side bus (Front-Side Bus, FSB), a point-to-point interface such as a quickpath interconnect (QuickPath Interconnect, QPI) interface, or a similar connection 406. The processor 401 executes instructions for controlling a data processing operation of a general type. In an embodiment, the controller hub 403 includes but is not limited to a graphics & memory controller hub (Graphics & Memory Controller Hub, GMCH) (not shown) and an input/output hub (Input/Output Hub, IOH) (the input/output hub may be on separate chips) (not shown). The GMCH includes a memory and a graphics controller, and is coupled to the IOH.

The navigation device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination thereof. The memory 404 may include one or more tangible and non-transitory computer-readable media that are configured to store data and/or instructions. The computer-readable storage medium stores instructions, and specifically, stores a temporary copy and a permanent copy of the instructions. The instructions may include an instruction that enables, when executed by at least one of the processors, the navigation device 400 to implement the methods shown in FIG. 2, FIG. 5, and FIG. 8. When the instructions are run on a computer, the computer is enabled to perform the navigation method disclosed in embodiments of this application.

In an embodiment, the coprocessor 402 is a dedicated processor, for example, a high-throughput many integrated core (Many Integrated Core, MIC) processor, a network or communication processor, a compression engine, a graphics processing unit, general-purpose computing on graphics processing units (General-purpose computing on graphics processing units, GPGPU), or an embedded processor. Optional properties of the coprocessor 402 are indicated by dashed lines in FIG. 13.

In an embodiment, the navigation device 400 may further include a network interface (Network Interface Controller, NIC) 406. The network interface 406 may include a transceiver, configured to provide a radio interface for the navigation device 400, to communicate with any other suitable device (for example, a front-end module or an antenna). In various embodiments, the network interface 406 may be integrated with another component of the navigation device 400. The network interface 406 may implement a function of a communication unit in the foregoing embodiments.

The navigation device 400 may further include an input/output (Input/Output, I/O) device 405. The I/O 405 may include: a user interface, where this design enables a user to interact with the navigation device 400; a peripheral component interface, where this design enables a peripheral component to interact with the navigation device 400; and/or a sensor designed to determine an environmental condition and/or location information related to the navigation device 400.

It should be noted that FIG. 13 is merely an example. To be specific, although FIG. 13 shows that the navigation device 400 includes a plurality of components such as the processor 401, the controller hub 403, and the memory 404, during actual application, a device using the methods in this application may include only some of the components of the navigation device 400, for example, may only include the processor 401 and the network interface 406. In FIG. 13, properties of optional components are shown by using dashed lines.

FIG. 14 shows a block diagram of a system on chip (System on Chip, SoC) 500 according to an embodiment of this application. In FIG. 14, similar components have a same reference numeral. In addition, a dashed box is an optional feature of a more advanced SoC. In FIG. 14, the SoC 500 includes: an interconnection unit 550 coupled to a processor 510; a system agent unit 580; a bus controller unit 590; an integrated memory controller unit 540; one group of or one or more coprocessors 520, which may include integrated graphics logic, an image processor, an audio processor, and a video processor; a static random access memory (Static Random Access Memory, SRAM) unit 530; and a direct memory access (Direct Memory Access, DMA) unit 560. In an embodiment, the coprocessor 520 includes a dedicated processor, for example, a network or communication processor, a compression engine, general-purpose computing on graphics processing units (General-purpose computing on graphics processing units, GPGPU), a high-throughput MIC processor, or an embedded processor.

The static random access memory (SRAM) unit 530 may include one or more tangible and non-transitory computer-readable media that are configured to store data and/or instructions. The computer-readable storage medium stores instructions, and specifically, stores a temporary copy and a permanent copy of the instructions. The instructions may include an instruction that enables, when executed by at least one of the processors, the SoC to implement the methods shown in FIG. 2, FIG. 5, and FIG. 8. When the instructions are run on a computer, the computer is enabled to perform the navigation method disclosed in embodiments of this application.

The term "and/or" in this specification is merely an association relationship for describing associated objects and indicates that three relationships may exist. For example, A and/or B may indicate the following three cases: Only A exists, both A and B exist, and only B exists. In addition, in this embodiment, values in each data range include end values. For example, A=10-50 indicates that A may be 10 or 50.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system with a processor such as a digital signal processor (Digital Signal Processor, DSP), a microcontroller, an application-specific integrated circuit (ASIC), or a microprocessor.

The program code may be implemented in a high-level programming language or an object-oriented programming language to communicate with the processing system. The program code may alternatively be implemented in an assembly language or a machine language when required. Actually, the mechanism described in this specification is not limited to a scope of any particular programming language. In any case, the language may be a compiled language or an interpretive language.

One or more aspects of at least one embodiment may be implemented by using representative instructions stored in a computer-readable storage medium. The instructions represent various logic in a processor, and when the instructions are read by a machine, the machine is enabled to manufacture logic for performing the technologies described in this specification. These representations, referred to as an "intellectual property (Intellectual Property, IP) core" may be stored in a tangible computer-readable storage medium and provided for a plurality of customers or production facilities for loading into a manufacturing machine that actually manufactures the logic or processor.

In some cases, an instruction converter may be configured to convert instructions from a source instruction set to a target instruction set. For example, the instruction converter may convert, in a transform (for example, static binary transform, or dynamic binary transform including dynamic compilation), morphing, emulation, or another manner, the instructions into one or more other instructions processed by the core. The instruction converter may be implemented by software, hardware, firmware, or a combination thereof. The instruction converter may be located on the processor, outside the processor, or partially on the processor and partially outside the processor.

**Claims**

1. A navigation method, wherein the method comprises:

   in a process in which a target device travels toward a first location point, obtaining a first speed at which the target device currently travels;
   determining a playing parameter of a navigation animation based on the first speed, wherein the navigation animation indicates a traveling path for the target device to reach the first location point, and the playing parameter indicates at least a playing speed of the navigation animation; and
   outputting the navigation animation in a visualized manner based on the playing parameter.

2. The method according to claim 1, wherein determining the playing parameter of the navigation animation based on the first speed comprises:

   determining a road type of a current traveling road of the target device;
   determining, based on the road type, a first average vehicle speed corresponding to the current traveling road;
   determining an adjustment coefficient of an initial playing parameter of the navigation animation based on the first speed and the first average vehicle speed; and
   adjusting the initial playing parameter based on the adjustment coefficient to obtain the playing parameter.

3. The method according to claim 2, wherein the playing parameter is playing duration of the navigation animation, the adjustment coefficient is an $M^{th}$ power of a ratio of the first average vehicle speed to the first speed, and M is greater than 0 and less than 1.

4. The method according to claim 3, wherein M is determined based on the road type of the current traveling road.

5. The method according to claim 1, wherein outputting the navigation animation comprises:
   outputting the navigation animation when the target device travels to a location that is at a first distance from the first location point, wherein the first distance is determined based on the first speed, an expected speed of the target device at the first location point, and a user driving reaction time.

6. The method according to claim 5, wherein the first distance is greater than or equal to a product of the user driving reaction time and an average value of the first speed and the expected speed.

7. The method according to claim 1, wherein outputting the navigation animation in the visualized manner comprises:
   displaying the navigation animation by using an augmented reality head-up display technology.

8. The method according to claim 7, wherein the navigation animation comprises a path indication icon, and a virtual image of the path indication icon is superimposed at the first location point; and
displaying the navigation animation comprises:
adjusting visibility of the path indication icon based on a current distance between the target device and the first location point, to cause the visibility of the path indication icon to be positively correlated with the current distance.

9. The method according to claim 8, wherein the path indication icon comprises a first icon and a second icon that are superimposed on each other, and in a case of same display transparency, visibility of the first icon is higher than visibility of the second icon; and
adjusting the visibility of the path indication icon based on the current distance between the target device and the first location point comprises:
separately adjusting first transparency of the first icon and second transparency of the second icon based on the current distance, to adjust the visibility of the path indication icon, wherein the first transparency is negatively correlated with the current distance, and the second transparency is positively correlated with the current distance.

10. The method according to claim 9, wherein the first icon and the second icon have a same size.

11. A navigation method, wherein the method comprises:

    displaying a navigation animation by using an augmented reality head-up display technology in a process in which a target device travels toward a first location point, wherein the navigation animation indicates a forward path for the target device to reach the first location point; and
    the navigation animation comprises a path indication icon, a virtual image of the path indication icon is superimposed at the first location point, and displaying the navigation animation comprises:
    adjusting visibility of the path indication icon based on a current distance between the target device and the first location point, to cause the visibility of the path indication icon to be positively correlated with the current distance.

12. The method according to claim 11, wherein the path indication icon comprises a first icon and a second icon that are superimposed on each other, and in a case of same display transparency, visibility of the first icon is higher than visibility of the second icon; and
adjusting the visibility of the path indication icon based on the current distance between the target device and the first location point comprises:
separately adjusting first transparency of the first icon and second transparency of the second icon based on the current distance, to adjust the visibility of the path indication icon, wherein the first transparency is negatively correlated with the current distance, and the second transparency is positively correlated with the current distance.

13. The method according to claim 12, wherein the first icon and the second icon have a same size.

14. A navigation device, comprising:

    a memory, configured to store instructions executed by one or more processors of the navigation device; and
    a processor, wherein when the processor executes the instructions in the memory, the navigation device is enabled to perform the navigation method according to any one of claims 1 to 13.

15. A computer-readable storage medium, wherein the computer-readable storage medium stores instructions, and when the instructions are executed on a computer, the computer is enabled to perform the navigation method according to any one of claims 1 to 13.

16. A computer program product, wherein when program code comprised in the computer program product is executed by a computer or a processor, the computer or the processor is enabled to perform the navigation method according to any one of claims 1 to 13.

17. A vehicle, wherein the vehicle comprises the navigation device according to claim 14.

FIG. 1A

FIG. 1B

FIG. 1C

| | |
|---|---|
| In a process in which a target device travels toward a first location point, obtain a first speed at which the target device currently travels | S110 |
| Determine a playing parameter of a navigation animation based on the first speed | S120 |
| Output the navigation animation in a visualized manner based on the playing parameter | S130 |

FIG. 2

FIG. 3

FIG. 4

In a process in which a target device travels toward a first location point, obtain a first speed at which the target device currently travels and an expected speed of the target device at the first location point — S210

Determine a first distance based on the first speed, the expected speed, and a user driving reaction time, where the first distance is greater than or equal to a product of the user driving reaction time and an average value of the first speed and the expected speed — S220

Output a navigation animation when the target device travels to a location that is at the first distance from the first location point — S230

FIG. 5

FIG. 6

FIG. 7A

FIG. 7B

Obtain a current distance between a target device and a first location point in a process in which the target device travels toward the first location point ⟋ S310

Adjust visibility of a path indication icon based on the current distance between the target device and the first location point, to cause the visibility of the path indication icon to be positively correlated with the current distance ⟋ S320

Project a navigation animation based on adjusted visibility of the path indication icon ⟋ S330

FIG. 8

41 — 42 — 40 —

+ Superimpose →

FIG. 9A

41 — 42 — 40 —

+ Superimpose →

FIG. 9B

FIG. 10A

FIG. 10B

Navigation device 100

FIG. 11

| Application layer | Camera | Calendar | Map | WLAN | Music | Messages |
|---|---|---|---|---|---|---|
| | Gallery | Call | Navigation | Bluetooth | Video | ... |

| Application framework layer | Window manager | Content provider | Phone manager | Resource manager |
|---|---|---|---|---|
| | Notification manager | View system | ... | |

| System library | Surface manager | Three-dimensional graphics processing library | | Android runtime |
|---|---|---|---|---|
| | Two-dimensional graphics engine | Media library | ... | |

| Kernel layer | Display driver | Camera driver | |
|---|---|---|---|
| | Audio driver | Sensor driver | ... |

FIG. 12

400

401

Processor

402
Coprocessor

403
Controller hub

404
Memory

405
I/O

406
NIC

FIG. 13

500

510
Processor

520
Coprocessor

550
Interconnection unit

590
Bus controller
unit

530
SRAM unit

580
System agent
unit

540
Integrated memory
controller unit

560
DMA unit

FIG. 14

## INTERNATIONAL SEARCH REPORT

| International application No. |
| --- |
| **PCT/CN2024/079065** |

| A. | CLASSIFICATION OF SUBJECT MATTER |
| --- | --- |

G01C21/36(2006.01)i; G01P3/36(2006.01)i

According to International Patent Classification (IPC) or to both national classification and IPC

| B. | FIELDS SEARCHED |
| --- | --- |

Minimum documentation searched (classification system followed by classification symbols)

IPC: G01C G01P

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 导航, 目标, 速度, 动画, 播放, 指示, 参数, 位置, 距离, 图标, 虚像叠加, navigat+, speed, target, cartoon, position, distance, indicat+, ico+, virtual image, play+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115711631 A (TENCENT TECHNOLOGY (SHENZHEN) CO., LTD.) 24 February 2023 (2023-02-24) <br> description, paragraphs [0005]-[0047] | 1-17 |
| A | CN 115892055 A (TENCENT TECHNOLOGY (SHENZHEN) CO., LTD.) 04 April 2023 (2023-04-04) <br> entire document | 1-17 |
| A | CN 111854780 A (EVERGRANDE HENGCHI NEW ENERGY AUTOMOBILE INSTITUTE (SHANGHAI) CO., LTD.) 30 October 2020 (2020-10-30) <br> entire document | 1-17 |
| A | CN 115855090 A (SHANGHAI LICHI SEMICONDUCTOR CO., LTD.) 28 March 2023 (2023-03-28) <br> entire document | 1-17 |
| A | US 2015346348 A1 (HUAWEI DEVICE CO., LTD.) 03 December 2015 (2015-12-03) <br> entire document | 1-17 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 April 2024** | **18 May 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079065**

| Patent document cited in search report | | | Publication date (day/month/year) | Patent family member(s) | Publication date (day/month/year) |
|---|---|---|---|---|---|
| CN | 115711631 | A | 24 February 2023 | None | |
| CN | 115892055 | A | 04 April 2023 | None | |
| CN | 111854780 | A | 30 October 2020 | None | |
| CN | 115855090 | A | 28 March 2023 | None | |
| US | 2015346348 | A1 | 03 December 2015 | None | |

Form PCT/ISA/210 (patent family annex) (July 2022)

**EP 4 711 720 A1**

**REFERENCES CITED IN THE DESCRIPTION**

**Patent documents cited in the description**

- CN 202310802547